# EUROPEAN PATENT APPLICATION

(11) **EP 4 471 078 A1**
(43) Date of publication of application: **04.12.2024**
(21) Application number: 23746954.9
(22) Date of filing: 24.01.2023
(51) Int. Cl.: C08J 3/24, C08K 5/11, C08K 5/14, C08L 9/00, C08L 67/04, C08L 101/16

(54) **POLYLACTIC ACID RESIN COMPOSITION**

(30) Priority: 27.01.2022 JP 2022011333
(71) Applicant: OSAKA UNIVERSITY, Suita-shi Osaka 565-0871 (JP)
(72) Inventor: UYAMA, Hiroshi, Suita-shi, Osaka 565-0871 (JP); HSU, Yu-I, Suita-shi, Osaka 565-0871 (JP); KIBA, Yuji, Suita-shi, Osaka 565-0871 (JP); ABE, Chikako, Suita-shi, Osaka 565-0871 (JP)
(74) Representative: Schlich
(86) International application number: PCT/JP2023/002150
(87) International publication number: WO 2023/145743

(57) **Abstract**

A polylactic acid resin composition according to the present invention is formed by dynamically vulcanizing a resin mixture containing a polylactic acid-based resin, polyisoprene, and an auxiliary agent, the auxiliary agent containing a compound represented by a formula (I) below. The polylactic acid resin composition according to the present invention can be used in a wide range of usages, such as molded products for automobiles, molded products for electrical products, molded products for agricultural materials, molded products for office use, and molded products for daily necessities.

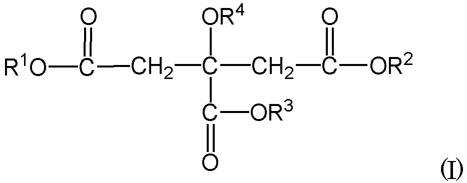

## Description

### Technical Field

The present invention relates to a polylactic acid resin composition, and more specifically to a polylactic acid resin composition with improved impact resistance.

### Background Art

Conventionally, polylactic acid, which is a type of bioplastic, has been widely used in various fields such as medical materials and agricultural materials. However, polylactic acid has low impact resistance and low flexibility and thus there is limitation on usages of polylactic acid. Therefore, there is demand for improvement of polylactic acid as a resin composition used in combination with an additive. For example, in order to use polylactic acid for automobile parts, home appliance components, and the like, polylactic acid needs to have thermoplasticity in addition to improvement of impact resistance and flexibility.

On the other hand, in order to improve the impact resistance and flexibility of polylactic acid, copolymerization and alloying of polylactic acid, and additives such as rubber have been utilized. However, most of the products used in these are petroleum-derived products, which sacrifice biomass-derived characteristics of polylactic acid.

To address this, an example of improving the impact resistance and flexibility of polylactic acid using a biomass-derived material is a composition of polylactic acid and natural rubber. It is also possible to improve impact resistance of polylactic acid by adding Eucommia elastomer derived from other plants.

Polymer blends are mostly immiscible, and thus physical properties thereof are not improved as designed. Therefore, it is important to devise ways to increase interfacial affinity between polymers.

For example, for the purpose of improving the impact resistance of polylactic acid, resin compositions obtained by adding natural rubber such as epoxidized natural rubber and a carbodiimide compound to polylactic acid have been reported (Patent Documents 1 and 2), but these resin compositions are unsuitable for industrial production due to a poor work environment. Also, a method for increasing impact resistance through dynamic vulcanization of natural rubber or Eucommia elastomer using peroxide has been proposed (Patent Document 3 and Non-Patent Document 1), which requires addition of a large amount of natural rubber, thus deteriorating other physical properties of polylactic acid. The degree of improvement in impact resistance of Eucommia elastomer is not high, and is only slightly higher than that of ABS.

### Related Art Documents

### Patent Documents

Patent Document 1: JP2012-219151 A
Patent Document 2: JP2011-241317 A
Patent Document 3: JP2017-115041 A

### Non-Patent Documents

Non-patent Document 1: Yukun Chen et al., ACS Appl. Mater. Interfaces 2014, 6, 3811-3816

### Summary of Invention

### Problem to be Solved by the Invention

The present invention aims to resolve the above issues, and to provide a polylactic acid resin composition that can improve impact resistance by using a biomass-derived material in place of natural rubber.

### Means for Solving the Problem

The present invention is a polylactic acid resin composition formed by dynamically vulcanizing a resin mixture containing a polylactic acid-based resin, polyisoprene, and an auxiliary agent,
wherein the auxiliary agent contains a compound represented by a formula (I) below: 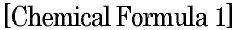 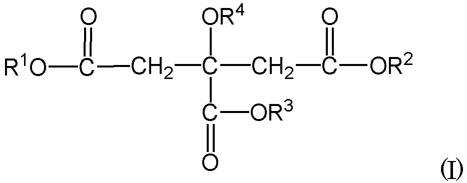
where in the formula (I), R¹, R², and R³, and R⁴ are each independently selected from the group consisting of a hydrogen atom and alkyl groups having 1 to 8 carbon atoms that may be branched.

In one embodiment, R¹, R², and R³ in the formula (I) are each an *n*-butyl group, and R⁴ is a hydrogen atom.

In one embodiment, the resin mixture further contains a crosslinking agent.

In a further embodiment, the crosslinking agent is selected from the group consisting of 2,5-dimethyl-2,5-di(*t*-butylperoxy)hexane and dicumyl peroxide.

In one embodiment, the polyisoprene is *trans-*polyisoprene.

The present invention is also a method for producing a polylactic acid resin composition, comprising:
obtaining a resin mixture by mixing a polylactic acid-based resin, polyisoprene, and an auxiliary agent; and
dynamically vulcanizing the resin mixture by heating and kneading the resin mixture,
wherein the auxiliary agent contains a compound represented by a formula (I) below: 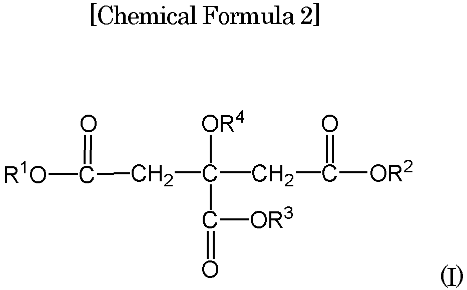
where in the formula (I), R¹, R², and R³, and R⁴ are each independently selected from the group consisting of a hydrogen atom and alkyl groups having 1 to 8 carbon atoms that may be branched.

The present invention is also a resin molded product comprising the polylactic acid resin composition.

### Effects of the Invention

According to the present invention, it is possible to provide a resin composition having improved impact resistance, compared to polylactic acid. The polylactic acid resin composition according to the present invention also has thermoplasticity, and thus can provide a wide variety of resin molded products. Furthermore, the polylactic acid resin composition according to the present invention can be provided using a biomass-derived material that is readily available as a constituent component, which makes it even more applicable to industrial production processes.

### Description of Embodiments

Hereinafter, the present invention will be described in detail.

### Polylactic acid resin composition

The polylactic acid resin composition according to the present invention is formed by dynamically vulcanizing a resin mixture containing a polylactic acid-based resin, polyisoprene, and an auxiliary agent.

Polylactic acid-based resin constituting a resin composition according to the present invention is a general term for resin based on polylactic acid having biodegradability (e.g., the property of being degradable by microorganisms in various environments in the natural world, such as soil, compost, freshwater, or seawater). Examples of polylactic acid-based resin include polymers and copolymers containing L-lactic acid and/or D-lactic acid as monomer units, and copolymers of L-lactic acid and/or D-lactic acid as monomer units, other organic acids such as glycolic acid, 3-hydroxybutyric acid, 4-hydroxybutyric acid, 4-hydroxyvaleric acid, 5-hydroxyvaleric acid, and 6-hydroxycaproic acid as other monomer units; and/or another alcohol such as vinyl alcohol or butanediol. When a polylactic acid-based resin contains the above other monomer unit, the polylactic acid-based resin contains the other monomer units in a proportion of preferably 50 mol% or less, and more preferably 0.1 mol% to 50 mol%. In the present invention, the polylactic acid-based resin is preferably poly(L-lactic acid), which contains L-lactic acid as a monomer unit because it is highly versatile and readily available.

Furthermore, the weight average molecular weight of the polylactic acid-based resin in the present invention is preferably 10,000 to 1,000,000, and more preferably 50,000 to 500,000. If the weight average molecular weight of the polylactic acid-based resin is less than 10,000, the mechanical properties of the resulting polylactic acid resin composition may deteriorate, which may impair versatility of a resin molded product. If the weight average molecular weight of the polylactic acid-based resin is more than 1,000,000, the moldability of the resulting polylactic acid resin composition may be reduced.

The polylactic acid-based resin may be obtained, for example, through ring-opening polymerization of lactide or dehydration condensation of L- and/or D-lactic acid, or may be obtained by heating and polymerizing L- and/or D-lactic acid in a predetermined organic solvent such as diphenyl ether under a reduced pressure. Alternatively, the polylactic acid-based resin may be produced from biomass using a method known to those skilled in the art. Examples of biomass include, but are not necessarily limited to, plant materials such as corn, sweet potatoes, potatoes, sugar cane, and combinations thereof.

The content of the polylactic acid-based resin can be set, for example, based on the content of polyisoprene, which will be described later. For example, when the content of polyisoprene is 100 parts by mass, the content of polylactic acid-based resin is preferably 580 parts by mass to 2000 parts by mass, and more preferably 590 parts by mass to 950 parts by mass. If the content of the polylactic acid-based resin is less than 580 parts by mass, the amount of the polylactic acid-based resin contained in the resulting resin composition will be relatively reduced compared to the amounts of other constituent components, which may deviate from the goal of providing a polylactic acid resin composition that is derived from biomass and has excellent biodegradability, for example. If the content of the polylactic acid-based resin is more than 2000 parts by mass, the amount of the polylactic acid-based resin contained in the resulting resin composition will be relatively increased compared to the amounts of other constituent components, and thus the resulting resin composition may exhibit undesirable properties (e.g., a decrease in impact resistance or flexibility) of the polylactic acid-based resin.

In the polylactic acid resin composition according to the present invention, polyisoprene may be those derived from, for example, biomass, those chemically synthesized, or a combination thereof. Examples of polyisoprene include *cis-* and *trans-*polyisoprene, and combinations thereof. For example, it is preferable that polyisoprene is obtained from a material derived from biomass because it is possible to provide environmentally friendly resin compositions together with the above polylactic acid-based resin. Further, in the present invention, such polyisoprene may be chemically modified as appropriate with a maleic anhydride group, a maleimide group, an epoxy group, or the like.

Examples of biomass containing polyisoprene includes plant tissues constituted by roots, stems (trunks), leaves, samaras (pericarps and seeds), and bark of plant bodies, and combinations thereof. Examples of plant bodies constituting these plant tissues include, but are not necessarily limited to, *Eucommia ulmoides Oliver, Palaquim gutta,* and *Mimusops balata.* In the present invention, it is possible to use trans-polyisoprene derived from Eucommia, because the content of trans- 1,4-bond units in the structure thereof is high and the content of bond isomer units in the structure is low, in addition to being able to obtain trans-polyisoprene having a high weight average molecular weight. *trans-*Polyisoprene can be obtained using a method known in the art, using, for example, crushed dried or crushed non-dried plant tissues described above and/or cut powder of the plant tissues.

The number average molecular weight (Mn) of polyisoprene is not necessarily limited. For example, when polyisoprene is trans-polyisoprene derived from Eucommia, the Mn is preferably 10,000 to 1,500,000, more preferably 50,000 to 1,500,000, and even more preferably 100,000 to 1,500,000. Alternatively, when polyisoprene is ds-polyisoprene, the Mn is preferably 10,000 to 3,000,000, more preferably 15,000 to 1,000,000, and even more preferably 30,000 to 100,000.

The weight average molecular weight (Mw) of polyisoprene is not necessarily limited. For example, when polyisoprene is trans-polyisoprene derived from Eucommia, the Mw is preferably 1×10³ to 5×10⁶, more preferably 1×10⁴ to 5×10⁶, and even more preferably 1×10⁵ to 5×10⁶. Alternatively, when polyisoprene is cis-polyisoprene, the Mw is preferably 10,000 to 3,000,000, more preferably 15,000 to 1,000,000, and even more preferably 30,000 to 100,000.

Polyisoprene preferably has the form of particles, and has a sea-island structure in which polyisoprene particles are slightly dispersed in the matrix of the polylactic acid-based resin. The average particle size of polyisoprene having such particle form is preferably 0.1 µm to 100 µm, and more preferably 0.1 µm to 10 µm. When the average particle size of polyisoprene particles satisfies such an average particle size range, the impact resistance of the polylactic acid resin composition according to the present invention containing polyisoprene is improved. The average particle size of polyisoprene particles can be calculated by, for example, removing trans-polyisoprene particles present in a cross section of a sample piece made of the resulting polylactic acid resin composition by etching the cross section using a solvent such as *n*-hexane, performing surface treatment on the resulting pores (whose sizes correspond to particle sizes of trans-polyisoprene contained in the polyresin composition) using sputtering such as gold vapor deposition, and then measuring the radius of the surface-treated pores through the viewing angle of an electron micrograph.

In the polylactic acid resin composition according to the present invention, the auxiliary agent contains a compound represented by the following formula (I): 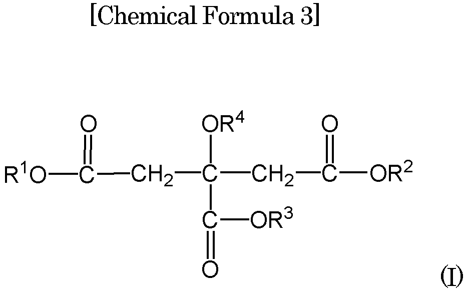 In the formula (I), R¹, R², and R³, and R⁴ are each independently selected from the group consisting of a hydrogen atom and alkyl groups having 1 to 8 carbon atoms that may be branched.

The compound represented by the formula (I) is, for example, a compound having a boiling point of 120°C to 250°C, and preferably 125°C to 230°C under 1 atm (1 mmbar). Examples of specific compounds represented by the formula (I) include triethyl citrate (TEC), tributyl citrate (TBC), *o*-acetyl tributyl citrate (ATBC), and *o-*acetyl tris(2-ethylhexyl)citrate (ATEHC), and combinations thereof. Note that relationships between these specific compounds and boiling points are as shown in Table 1 below

**Table 1**

| Abbreviated Name for Compounds of Formula (I) | Formula (I) | | Boiling point (under 1 atm) (°C) |
|---|---|---|---|
| | R¹, R², and R³ | R⁴ | |
| TEC | All are ethyl groups | Hydrogen atom | 127 |
| TBC | All are butyl groups | Hydrogen atom | 170 |
| ATBC | All are butyl groups | Acetyl group | 173 |
| ATEHC | All are 2-ethylhexyl groups | Acetyl group | 225 |

Note that, in the present invention, the auxiliary agent preferably contains tributyl citrate (TBC) because it is readily available and can provide excellent impact resistance to the resulting resin composition.

The content of the auxiliary agent is preferably 3% by mass to 30% by mass, and more preferably 5% by mass to 20% by mass, with respect to the entire polylactic acid resin composition. If the content of the auxiliary agent is less than 3% by mass, the resulting resin composition may not have sufficient impact resistance. If the content of the auxiliary agent exceeds 30% by mass, there is almost no change in the impact resistance of the resulting resin composition, which may lead to a lack of productivity.

In the present invention, a resin mixture containing the polylactic acid-based resin, polyisoprene, and the auxiliary agent is dynamically vulcanized because the resin mixture contains an appropriate crosslinking agent, for example.

The above-described polylactic acid-based resin and polyisoprene originally have properties that they are immiscible with each other when these two components are simply blended. A polylactic acid-based resin and polyisoprene having such properties can be made miscible with each other through dynamic vulcanization in the presence of an appropriate crosslinking agent.

The crosslinking agent that can be used in the polylactic acid resin composition according to the present invention is blended in advance into the resin mixture together with the polylactic acid-based resin and polyisoprene. Dynamic vulcanization of such a resin mixture can provide superior physical properties (e.g., impact resistance) to the resulting resin composition, compared to an uncrosslinked resin composition.

Examples of such crosslinking agents include organic peroxides (e.g., 2,5-dimethyl-2,5-di(*t*-butylperoxy)hexane and dicumyl peroxide, and combinations thereof); sulfur; organosulfur compounds; organic nitroso compounds (e.g., aromatic nitroso compounds); oxime compounds; metal oxides (e.g., zinc oxide and magnesium oxide, and combinations thereof); polyamines; metalloids and compounds thereof (e.g., metalloids such as selenium and tellurium, and compounds thereof, and combinations thereof; resin crosslinking agents (e.g., alkylphenol formaldehyde resins and brominated alkylphenol formaldehyde resins, and combinations thereof); organic organosiloxane compounds having two or more SiH groups in each molecule, and combinations thereof. It is preferable to use an organic peroxide as a crosslinking agent because, for example, deterioration of mechanical properties of the resin composition through degradation of the polylactic acid-based resin and polyisoprene during crosslinking is prevented; large-scale equipment for crosslinking is not particularly required; and the organic peroxide is readily available as a reagent and a material for industrial production.

The content of the crosslinking agent can be preferably set based on the content of polyisoprene described above. In the present invention, for example, when the content of polyisoprene is 100 parts by mass, the content of the crosslinking agent is preferably 0.3 parts by mass to 50 parts by mass, more preferably 2.8 parts by mass to 48 parts by mass, and even more preferably 4 parts by mass to 45 parts by mass. If the content of the crosslinking agent is less than 0.3 parts by mass, it may be difficult to perform appropriate dynamic vulcanization in the resulting resin composition, making it impossible to provide satisfactory impact resistance. If the content of the crosslinking agent exceeds 50 parts by mass, dynamic crosslinks formed in the resulting resin composition will be so-called overcrosslinks, which will firmly restrain constituent molecules and thus may deteriorate moldability of the resin composition.

The polylactic acid resin composition according to the present invention may further contain other additive materials as needed. Examples of the other additive materials include a filler, a crystal nucleating agent, a plasticizer, a vulcanization accelerator, an anti-aging agent, and a softening agent, and combinations thereof. Here, examples of fillers include, but are not particularly limited to, cellulose powder, carbon black, silica, talc, and titanium oxide, and combinations thereof. There is no particular limitation on the nucleating agent as long as it can facilitate crystallization of the above polylactic acid-based resin, and any inorganic or organic crystal nucleating agents can be used. Organic crystal nucleating agents are preferable, and more preferable examples thereof include monopolymer containing, as a monomer unit, lactic acid (unit) having different chirality from the polylactic acid-based resin, and a copolymer containing the lactic acid unit and other monomer units (e.g., polysaccharides such as starch and glucomannan, monosaccharides such as glucose, disaccharides such as sucrose and maltose, and oligosaccharides such as cyclodextrin). There is no particular limitation on the plasticizer, the vulcanization accelerator, and the anti-aging agent, and commercially available plasticizers, vulcanization accelerators, and anti-aging agents can be used. There is no particular limitation on examples of the softening agent, and an example thereof is polycaprolactone.

There is no particular limitation on the content of the other additive materials, and any amount can be selected by those skilled in the art in consideration of the contents of the polylactic acid-based resin, polyisoprene, and the auxiliary agent.

The polylactic acid resin composition according to the present invention is formed by dynamically vulcanizing a resin mixture containing a polylactic acid-based resin, polyisoprene, and a crosslinking agent, and a crosslinking agent and/or other additive materials as needed.

Here, the term "dynamic vulcanization" used in this specification refers to the formation of a crosslinking structure of polyisoprene obtained by kneading a resin mixture, and specifically, slight dispersion of crosslinked polyisoprene in the resin composition obtained through a reaction between polyisoprene and the crosslinking agent through a shear force during kneading. Dynamic vulcanization in such a resin composition can be easily modified by those skilled in the art by, for example, changing conditions in a kneading process, which will be described later.

The impact resistance of the polylactic acid resin composition according to the present invention is improved compared to a case where a polylactic acid-based resin is used alone, because the auxiliary agent enters molecular chains between the polylactic acid-based resin and polyisoprene in the sea-island structure in which polyisoprene particles are slightly dispersed in the matrix of the polylactic acid-based resin, and the distance between molecules is expanded, thus imparting flexibility. As a result, the polylactic acid resin composition according to the present invention can be used for various resin molded products (e.g., molded products for automobiles, molded products for electrical products, molded products for agricultural materials, molded products for office use, and molded products for daily necessities), which were difficult to form when using a conventional polylactic acid-based resin alone because of lack of impact resistance and the like.

### Method for producing polylactic acid resin composition

In the production of the polylactic acid resin composition according to the present invention, a resin mixture is first formed by mixing the above polylactic acid-based resin, polyisoprene, and auxiliary agent, and the above crosslinking agent and/or other additive materials as needed.

When obtaining the resin mixture, the polylactic acid-based resin, polyisoprene, and the auxiliary agent, and the crosslinking agent and other additive materials can be mixed in any order. In one embodiment, the polylactic acid-based resin, polyisoprene, and the auxiliary agent are mixed in advance and kneaded at a predetermined temperature, the crosslinking agent is added to the resulting kneaded mixture to form a resin mixture (note that, in this case, other additive materials can be added after kneading is performed using a kneading device, which will be described later). Alternatively, in other embodiments, a resin mixture can be formed by directly introducing the polylactic acid-based resin, polyisoprene, and the auxiliary agent, and the crosslinking agent and other additive materials altogether into a later-described kneading device, or by temporarily mixing them in a separate container.

Then, the resin mixture is kneaded under heat.

Various kneading devices can be used for this kneading. Examples of kneading devices include, but are not particularly limited to, a segment mixer, a Banbury mixer, a Brabender mixer, a pressure kneader, a single-screw extruder, a twinscrew extruder, and an open roll.

The temperature required for kneading can be set to any temperature by those skilled in the art in consideration of the melting point of a polylactic acid-based resin used and/or the degradation start temperature of polyisoprene. The kneading temperature is preferably 140°C to 250°C, more preferably 150°C to 220°C, and even more preferably 160°C to 200°C. If the kneading temperature is less than 140°C, it may be difficult to uniformly knead the resin mixture. If the kneading temperature exceeds 250°C, the molecular weight of the polylactic acid-based resin and/or polyisoprene may decrease, and mechanical properties of the resulting resin composition may deteriorate.

The time taken for kneading may vary depending on the total amount of a resin mixture used, the ratio of the contents of the polylactic acid-based resin, polyisoprene, and the auxiliary agent, and the crosslinking agent and other additive materials that constitute the resin mixture, and the like, and thus is not necessarily limited and can be set to any time by those skilled in the art. The time taken for kneading is preferably 3 minutes to 60 minutes, and more preferably 5 minutes to 30 minutes. If the time taken for kneading is less than 3 minutes, there is a risk that dynamic crosslinks in the resin mixture will be insufficient, and the impact resistance of the resulting resin composition will not be improved much compared to a case where the polylactic acid-based resin is used alone. If the time taken for kneading exceeds 60 minutes, the molecular chains of the polylactic acid-based resin and/or polyisoprene in the resin mixture may be cleaved, which may deteriorate mechanical properties of the resulting resin composition.

The resin mixture is dynamically vulcanized through kneading described above, and thus a resin composition having a sea-island structure constituted by a polyisoprene component dispersed phase and a polylactic acid component matrix phase can be obtained.

The polylactic acid resin composition according to the present invention is produced in this manner.

The polylactic acid resin composition according to the present invention has thermoplasticity due to the polylactic acid-based resin, which is a constituent component, even though the polyisoprene component is crosslinked. Thus, the polylactic acid resin composition according to the present invention can be molded into any resin molded products using a known thermoplastic resin molding method such as an extrusion molding method, an injection molding method, a blow molding method, or a compression molding method, and a molding apparatus using the method. Further, it is also possible to re-mold the resin molded product obtained in this manner.

### Examples

Hereinafter, the present invention will be described more specifically using examples. However, the present invention is not limited to these examples.

### Example 1: Production of resin sample (E1) subjected to dynamic vulcanization

A kneaded mixture was obtained by introducing, to a Labo Plastomill (4C150-01 manufactured by Toyo Seiki Co., Ltd.) provided with a segment mixer whose temperature was adjusted to 180°C±10°C, 32.4 g of pellets of polylactic acid (PLA) (TERRAMAC TE-2000 manufactured by Unitika Ltd.) as the polylactic acid-based resin, 3.6 g of trans-polyisoprene (TPI) derived from *Eucommia ulmoides Oliver* (Eucommia elastomer (registered trademark) manufactured by Hitachi Zosen Corporation) as a rubber component, and 4.0 g of tributyl citrate (TBC) as an auxiliary agent, melting and kneading the resulting mixture under the conditions at 180°C and 25 rpm for 1 minute, cooling the mixture to 150°C, and further melting and kneading the mixture under the conditions at 150°C and 25 rpm for 3 minutes.

Then, 0.5 g of 2,5-dimethyl-2,5-di(*t*-butylperoxy)hexane (Luperox 101 manufactured by Arkema Yoshitomi, Ltd.) was added as a crosslinking agent to the kneaded mixture obtained above, the resulting mixture was kneaded under the conditions at 160°C and 25 rpm for 20 minutes, and 0.15 g of an antioxidant (Irganox 1520 L manufactured by BASF Japan Ltd.; 4,6-bis(octylthiomethyl)-*o*-cresol) was added, the resulting mixture was kneaded for 5 minutes, and thus a resin sample (E1) in which the kneaded mixture was dynamically vulcanized was obtained. Note that the final concentration of TBC in the resin sample (E1) was 9.8% by mass.

The following tensile test and impact test were performed on the resin sample (E1).

### Tensile test

The resin sample (E1) obtained above was molded into a film with a thickness of 500±100 um and a width of 4 mm, and a tensile test was performed on the film using a tabletop tester (EZ-Graph manufactured by Shimadzu Corporation) using a 500 N load cell, according to JIS K 6251. The test condition was set such that the speed of a crosshead was 10 mm/min, and the length of the test piece was 20 mm. The maximum stress (MPa) and the Young's modulus (GPa) were obtained from the obtained stress-strain curve. The results are shown in Table 2.

### Impact strength through impact test/Charpy impact test

The resin sample (E1) obtained above was cut into small pieces, and Charpy impact test stripes (80×10×4 mm) were molded using a small injection molding machine (model: HAAKE MiniJet Pro manufactured by Thermo Fisher Scientific K.K.). Single notching was performed on the test pieces using a notching machine (manufactured by INSTRON). The Charpy impact test was performed using an impact tester (manufactured by Ueshima Seisakusho Co., Ltd.) in accordance with JIS K 7111-1. The obtained impact strength is shown in Table 2.

### Examples 2 and 3: Production of resin samples (E2) and (E3) subjected to dynamic vulcanization

Resin samples (E2) and (E3) subjected to dynamic vulcanization were obtained in the same manner as in Example 1, except that the contents of PLA, TPI, and TBC used were changed as shown in Table 2. Note that the final concentrations of TBC in the resin samples (E2) and (E3) were respectively 12.3% by mass and 14.8% by mass. The tensile test and the impact test were performed on the obtained resin samples (E2) and (E3) in the same manner as in Example 1. The results are shown in Table 2.

### Comparative Example 1: Production of resin sample (C1) subjected to dynamic vulcanization

A resin sample (C1) subjected to dynamic vulcanization was obtained in the same manner as in Example 1, except that TBC was not added and the contents of PLA and TPI used were changed as shown in Table 2. Note that the final concentration of TBC in the resin sample (C1) was 0% by mass. The tensile test and the impact test were performed on the obtained resin sample (C1) in the same manner as in Example 1. The results are shown in Table 2.

### Comparative Examples 2 to 5: Production of resin samples (C2) to (C5) not subjected to dynamic vulcanization

Resin samples (C2) to (C5) were obtained in the same manner as in Example 1, except that the contents of PLA, TPI, and TBC used were changed as shown in Table 2, the auxiliary agent and the antioxidant were not added, and dynamic vulcanization was not performed on resulting kneaded mixtures. The tensile test and the impact test were performed on the obtained resin samples (C2) to (C5) in the same manner as in Example 1. The results are shown in Table 2.

### Examples 4 and 5: Production of resin samples (E4) and (E5) subjected to dynamic vulcanization

Resin samples (E4) and (E5) subjected to dynamic vulcanization were obtained in the same manner as in Example 1, except that cis-polyisoprene (CPI) (cis-polyisoprene (CAS: 104389-31-3) manufactured by Sigma-Aldrich) was used as a rubber component in an amount shown in Table 2, instead of TPI, and the contents of PLA and TBC were changed as shown in Table 2. Note that the final concentrations of TBC in the resin samples (E4) and (E5) were respectively 10.0% by mass and 9.8% by mass. The tensile test and the impact test were performed on the obtained resin samples (E4) and (E5) in the same manner as in Example 1. The results are shown in Table 2.

### Comparative Examples 6 and 7: Production of resin samples (C6) and (C7) subjected to dynamic vulcanization

Resin samples (C6) and (C7) subjected to dynamic vulcanization were obtained in the same manner as in Example 1, except that cis-polyisoprene (CPI) (cis-polyisoprene (CAS: 104389-31-3) manufactured by Sigma-Aldrich) was used as a rubber component in an amount shown in Table 2, instead of TPI, and the contents of PLA, TBC, the auxiliary agent, and the antioxidant were changed as shown in Table 2. The tensile test and the impact test were performed on the obtained resin samples (C6) and (C7) in the same manner as in Example 1. The results are shown in Table 2.

### Comparative Examples 8 to 11: Production of resin samples (C8) to (C11) subjected to dynamic vulcanization

Resin samples (C8) to (C11) were obtained in the same manner as in Example 1, except that styrene-butadiene rubber (SB) (polystyrene-block-polybutadiene-block-polystyrene (CAS: 9003-55-8) manufactured by Sigma-Aldrich) was used as a rubber component in an amount shown in Table 2, instead of TPI, and the contents of PLA, TBC, the auxiliary agent, and the antioxidant were changed as shown in Table 2. The tensile test and the impact test were performed on the obtained resin samples (C8) to (C11) in the same manner as in Example 1. The results are shown in Table 2.

**Table 2**

| | Resin Sample | | | | | | | | | | Test Results | | |
|---|---|---|---|---|---|---|---|---|---|---|---|---|---|
| | Name | Dynamic Vulcanization of Mixtures | Auxiliary Agent Content in Sample (% by mass) | Components | | | | | | | Tensile Test | | Impact Test |
| | | | | Polylactic Acid-based Resin | Rubber Component | | | Auxiliary Agent | Crosslinking Agent | Antioxidant | | | |
| | | | | PLA (g) | TPI (g) | CPI (g) | SB (g) | TBC (g) | Luperox (g) | Irganox (g) | Maximum Stress (MPa) | Young's Modulus (GPa) | impact Strength (kJ/m²) |
| Example 1 | E1 | Yes | 9.8 | 32.4 | 3.6 | 0 | 0 | 4.0 | 0.5 | 0.15 | 25.5±1.6 | 1.01±0.10 | 77.3±4.6 |
| Example 2 | E2 | Yes | 12.3 | 31.5 | 3.5 | 0 | 0 | 5.0 | 0.5 | 0.15 | 22.0±0.4 | 0.85±0.01 | 77.1±3.4 |
| Example 3 | E3 | Yes | 14.8 | 30.6 | 3.4 | 0 | 0 | 676 | 0.5 | 0.15 | 21.3±0.8 | 0.61±0.01 | 81.7±0.9 |
| Comparative Example 1 | C1 | Yes | 0 | 36.0 | 4.0 | | 0 | 0 | 0.5 | 0.15 | 37.5±0.3 | 1.43±0.04 | 32.2±1.0 |
| Comparative Example 2 | C2 | No | 0 | 36.0 | 4.0 | 0 | 0 | 0 | 0 | 0 | 46.2±2.2 | 2.05±0.07 | 5.8±0.2 |
| Comparative Example 3 | C3 | No | 10.0 | 32.4 | 3.6 | 0 | 0 | 4.0 | 0 | 0 | 21.5±0.4 | 1.45±0.02 | 5.8±0.3 |
| Comparative Example 4 | C4 | No | 12.5 | 31.5 | 3.5 | 0 | 0 | 5.0 | 0 | 0 | 18.0±0.4 | 1.15±0.03 | 7.2±0.2 |
| Comparative Example 5 | C5 | No | 15.0 | 30.6 | 3.4 | 0 | 0 | 6.0 | 0 | 0 | 15.6±0.6 | 0.78±0.01 | 75.4±2.4 |
| Example 4 | E4 | Yes | 10.0 | 32.4 | 0 | 3.6 | 0 | 4.0 | 0 | 0 | 21.3±0.9 | 1.31±0.02 | 8.7±0.6 |
| Example 5 | E5 | Yes | 9.8 | 32.4 | 0 | 3.6 | 0 | 4.0 | 0.5 | 0.15 | 23.3+0.3 | 1.06±0.02 | 55.3±3.4 |
| Comparative Example 6 | C6 | Yes | 0 | 36.0 | 0 | 4.0 | 0 | 0 | 6 | 0 | 37.7±0.6 | 1.92±0.02 | 7.1±0.1 |
| Comparative Example 7 | C7 | Yes | 0 | 36.0 | 0 | 4.0 | 0 | 6 | 0.5 | 0.15 | 36.2±0.7 | 1.91±0.03 | 20.0±0.7 |
| Comparative Example 8 | C8 | Yes | 0 | 36.0 | 0 | 0 | 4.0 | 0 | 0 | 0 | 32.0±0.3 | 1.81±0.05 | 4.6±0.3 |
| Comparative Example 9 | C9 | Yes | 0 | 36.0 | 0 | 0 | 4.0 | 0 | 0.5 | 0.15 | 48.8±0.6 | 2.23±0.01 | 3.0±0.2 |
| Comparative Example 10 | C10 | Yes | 10.0 | 32.4 | 0 | 0 | 3.6 | 4.0 | 0 | 0 | 17.6±1.0 | 1.3210.05 | 5.9±0.1 |
| Comparatibe Example 11 | C11 | Yes | 9.8 | 32.4 | 0 | 0 | 3.6 | 4.0 | 0.5 | 0.15 | 26.3±0.4 | 1.27±0.01 | 2.9±0.1 |

| | | | | | | | | | | | | | |
|---|---|---|---|---|---|---|---|---|---|---|---|---|---|
| TPI:Trans-Polyisoprene, CPI:Cis-Polyisoprene, SB:Styrene-Butadiene Rubber TBC:Tributyl Citrate Luperox: 2,5-Dimethyl-2,5-Di(t-Butylperoxy)Hexane Irganox: 4,6-Bis(Octylthhiomethyl)-o-Cresol | | | | | | | | | | | | | |

As shown in Table 2, the maximum stress and the Young's modulus of the resin sample (E1) to (E3), which were obtained in examples 1 to 3 and contained the auxiliary agent (tributyl citrate (TBC)), decreased in the tensile test, compared to the resin sample (C1; comparative example) that did not contain the auxiliary agent, whereas the impact strength values thereof increased. Based on this, it is found that the flexibility and the impact resistance of the obtained resin samples are improved by adding an auxiliary agent such as TBC. Furthermore, the flexibility and the impact resistance of such a resin sample were likely to be improved by increasing the amount of the auxiliary agent added (Examples 1 to 3).

Also, for example, comparison between the resin sample (E1) obtained in Example 1 and the resin sample (C3) obtained in Comparative Example 3 revealed that there was a significant difference in the impact strength of the obtained resin samples depending on whether or not the kneaded mixtures were dynamically vulcanized even though auxiliary agents were added to kneaded mixtures for both resin samples. On the other hand, unless dynamic vulcanization was performed on a kneaded mixture, even when the auxiliary agent was added, there was no significant difference in the impact strength of the obtained resin samples (Comparative Examples 2 and 3).

Furthermore, the tendency that the impact resistance of the resin sample composed of a kneaded mixture containing an auxiliary agent is improved, compared to a resin sample that does not contain the auxiliary agent can also be confirmed in a manner similar to that when ds-polyisoprene (CPI) is used instead of trans-polyisoprene (TPI) as a rubber component, for example (Examples 4 and Comparative Example 6). Note that comparison of the relationships between components and impact strength of Examples 4 and 5 (and Comparative Examples 6 and 7) shown in Table 2 also reveals that the impact strength of a resulting resin sample is significantly improved when a kneaded mixture contains a predetermined amount of crosslinking agent and the like, compared to a case where a kneaded mixture containing no crosslinking agent is used.

On the other hand, even when the kneaded mixture contained the above auxiliary agent, when a rubber component (e.g., styrene-butadiene rubber (SB)) other than polyisoprene was added to the kneaded mixture, sufficient impact resistance was not imparted to the resulting resin sample. For example, comparison of the resin sample (E1) obtained in Example 1, the resin sample (E5) obtained in Example 5, and the resin sample (C11) obtained in Comparative Example 11 revealed that the impact strength of the resin samples (E1) and (E2) containing polyisoprene such as TPI or CPI is significantly higher than the impact strength of the resin sample (C11) of Comparative Example 11 obtained using SB as a rubber component, and the resin sample of the present invention had excellent impact resistance.

### Industrial Applicability

The present invention is useful for various resin molded products (e.g., molded products for automobiles, molded products for electrical products, molded products for agricultural materials, molded products for office use, and molded products for daily necessities), which are difficult to form when using a conventional polylactic acid-based resin alone.

## Claims

1. A polylactic acid resin composition formed by dynamically vulcanizing a resin mixture containing a polylactic acid-based resin, polyisoprene, and an auxiliary agent,
wherein the auxiliary agent contains a compound represented by a formula (I) below: 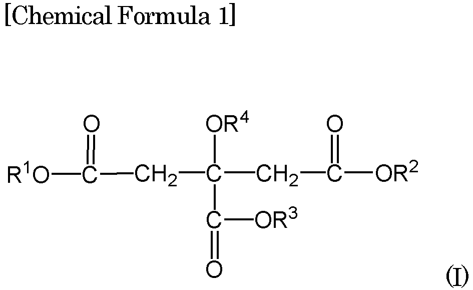
where in the formula (I), R¹, R², and R³, and R⁴ are each independently selected from the group consisting of a hydrogen atom and alkyl groups having 1 to 8 carbon atoms that may be branched.

2. The polylactic acid resin composition according to claim 1, wherein R¹, R², and R³ in the formula (I) are each an n-butyl group, and R⁴ is a hydrogen atom.

3. The polylactic acid resin composition according to claim 1, wherein the resin mixture further contains a crosslinking agent.

4. The polylactic acid resin composition according to claim 3, wherein the crosslinking agent is selected from the group consisting of 2,5-dimethyl-2,5-di(*t-*butylperoxy)hexane and dicumyl peroxide.

5. The polylactic acid resin composition according to claim 1, wherein the polyisoprene is trans-polyisoprene.

6. A method for producing a polylactic acid resin composition, comprising:
obtaining a resin mixture by mixing a polylactic acid-based resin, polyisoprene, and an auxiliary agent; and
dynamically vulcanizing the resin mixture by heating and kneading the resin mixture,
wherein the auxiliary agent contains a compound represented by a formula (I) below: 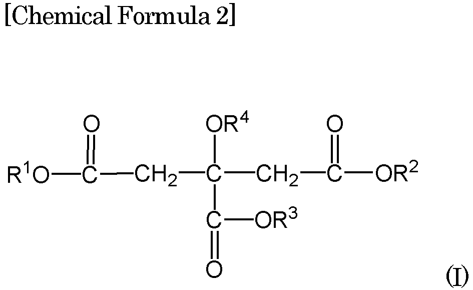
where in the formula (I), R¹, R², and R³, and R⁴ are each independently selected from the group consisting of a hydrogen atom and alkyl groups having 1 to 8 carbon atoms that may be branched.

7. A resin molded product comprising the polylactic acid resin composition according to claim 1.
